(19)

**Europäisches Patentamt**
**European Patent Office**
**Office européen des brevets**

(11) **EP 4 297 135 A1**

(12) **EUROPEAN PATENT APPLICATION**

(43) Date of publication:
**27.12.2023 Bulletin 2023/52**

(21) Application number: **23178295.4**

(22) Date of filing: **08.06.2023**

(51) International Patent Classification (IPC):
**H01M 8/04119** *(2016.01)* **H01M 8/04223** *(2016.01)*
**H01M 8/04291** *(2016.01)* **H01M 8/04492** *(2016.01)*
**H01M 8/04664** *(2016.01)*

(52) Cooperative Patent Classification (CPC):
**H01M 8/04291; H01M 8/04179; H01M 8/04231; H01M 8/04514; H01M 8/04679;** H01M 2220/20; H01M 2250/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022 US 202263353382 P**

(71) Applicant: **Hydrogenics Corporation Mississauga, ON L5T 2N6 (CA)**

(72) Inventors:
• **Malhi, Prabhsimran**
  **Brampton, L6X 5K2 (CA)**
• **Sorbera, Sonia**
  **Woodbridge, L4H 0X6 (CA)**

(74) Representative: **Pinnington, Giles Oliver Marks & Clerk LLP 1 New York Street Manchester M1 4HD (GB)**

(54) **A FUEL CELL PURGE SYSTEM BASED ON TILT LOCATION**

(57) The present disclosure generally relates to systems and methods for purging water from a fuel cell stack system depending on its tilt angle and tilt location. The fuel cell stack system includes a fuel cell stack with a first corner, a second corner, a third corner and a fourth corner, a tilt sensor located on the fuel cell stack, wherein the tilt sensor is operable to detect tilt location of the fuel cell stack, wherein the tilt location is the first, second, third or fourth corner of the fuel cell stack, a first purge valve system and a second purge valve system for removing water from an anode exhaust, and a controller. The first purge valve system is located at the first corner and the second purge valve system is located at the third corner, and a purge strategy of the first purge valve system and the second purge valve system is determined by the controller based on feedback provided by the tilt sensor.

*FIG. 1A*

**(Cont. next page)**

FIG. 1B

FIG. 1C

FIG. 1D

**Description**

**CROSS-REFERENCE TO RELATED APPLICATIONS**

This non-provisional application claims the benefit and priority, under 35 U.S.C. § 119(e) and any other applicable laws or statutes, to U.S. Provisional Application Serial No. 63/353,382 filed on June 17, 2022, the entire disclosure of which is incorporated herein by reference.

**TECHNICAL FIELD**

The present disclosure generally relates to systems and methods for purging water or gas from a fuel cell stack.

**BACKGROUND**

Vehicles and/or powertrains use fuel cells or fuel cell stacks for their power needs. A fuel cell or fuel cell stack permits positively charged ions to flow to the anode and directs negatively charged electrons along an external loop to the cathode, creating an electrical circuit and/or an electrical current. At the cathode, the negatively charged electrons and positively charged hydrogen ions combine with oxygen in the presence of a catalyst to form water, which flows out of the fuel cell or fuel cell stack.

Water in liquid and gaseous forms, and/or other gases (e.g., $N_2$) may accumulate at the anode and/ or at a cathode inlet. To control or manage the accumulation of water and/or other gases, periodic purging of a closed anode or closed cathode system is required. Therefore, management of water purging may dominate a fuel cell system purge strategy and direct implementation of one or more specific purging methods. Methods of purging, frequency of purging, and duration of purging are important variables of any such purge strategy.

Water produced from the fuel cell or fuel cell stack accumulates in the fuel cell system when the vehicle or powertrain is at different angles. Such water accumulation changes the purge strategy. For example, when the vehicle or powertrain is at an angle (e.g., uphill or downhill), the water purging strategy must be manipulated to account for the tilted positioning. Described herein are systems and methods for designing, implementing, and/or controlling a purge strategy in a fuel cell stack or powertrain to remove water when the vehicle or powertrain is operating at a tilted position.

**SUMMARY**

Embodiments of the present invention are included to meet these and other needs.

In one aspect, described herein, a fuel cell stack system comprises a fuel cell stack with a first corner, a second corner, a third corner, and a fourth corner, a tilt sensor, a first purge valve system and a second purge valve system for removing water from an anode exhaust, and a controller. The tilt sensor is operable to detect tilt location of the fuel cell stack by determining a longitudinal, transverse, and vertical axis of the fuel cell stack. The tilt location is the first, second, third or fourth corner of the fuel cell stack. The first purge valve system and the second purge valve system are located at two different corners of the fuel cell stack. The controller, including a memory and a processor, is configured to manage the first and the second purge valve system by determining a purge strategy based on feedback provided by the tilt sensor.

In some embodiments, first purge valve system may be located at the first corner and the second purge valve system may be located at the third corner. In some embodiments, the purge strategy may comprise purging frequency or purge on/off duty cycle of the first purge valve system and the second purge valve system.

In some embodiments, the controller may be configured to determine opening of the first or the second purge valve system depending on the tilt location. In the first aspect of the present invention, the controller may be configured to determine the opening of the first or second purge valve system in real-time. In some embodiments, the controller may be configured to determine the opening of the first or second purge valve system depending on the tilt angle or tilt location.

In some embodiments, the tilt sensor may be operable to detect the tilt angle if the fuel cell stack is tilted at the first, second, third or fourth corner. The first purge valve system may be located at the first corner and the second purge valve system may be located at the third corner, and the controller may be configured to determine the opening of the first purge valve system and not the second purge valve system when the tilt location is the first corner.

In some embodiments, the controller may be configured to determine the opening of the first purge valve system and not the second purge valve system when the tilt location is the second corner, the first purge valve system is located on the first corner, and the second corner and first corner are located on a same end plate of the fuel cell stack.

In some embodiments, the controller may be configured to determine the opening of the second purge valve system and not the first purge valve system when the tilt location is the third corner and the second purge valve system is located on the third corner. In some embodiments, the controller may be configured to determine the opening of the second purge valve system and not the first purge valve system when the tilt location is the fourth corner, the second purge valve system is located on the third corner, and the third corner and fourth corner are located on a same end plate of the fuel cell stack. In some embodiments, the tilt angle of the fuel cell stack may be more than about 5 degrees and less than about 80 degrees.

According to a second aspect, described herein, a method of operating a fuel cell stack system comprises monitoring performance of the fuel cell stack system, determining a tilt location of the fuel cell stack system, determining a purge strategy of a first purge valve system and a second purge valve system using a controller based on the tilt location, fuel cell stack operating conditions, time of operation, fuel cell stack pressure, one or more lookup maps, or fuel cell stack tilt angle, and opening the first purge valve system or the second purge valve system. The fuel cell stack system comprises a fuel cell stack with a first corner, a second corner, a third corner, and a fourth corner, and a tilt sensor.

In some embodiments, the method may further include monitoring the performance of the fuel cell stack system by analyzing cell voltages across the fuel cell stack using a cell voltage monitoring circuit board. In some embodiments, the method may further include determining the purge strategy based on the tilt sensor determining the tilt angle at the tilt location.

In some embodiments, purge strategy may include opening the first purge valve system if the tilt angle is in the range of about 5 degrees to about 15 degrees, the tilt location is the first corner or second corner, and the first purge valve is located on the first corner. The first corner and the second corner are on the same end plate of the fuel cell stack.

In some embodiments, the purge strategy may include opening the first purge valve system if the tilt angle is in the range of about 5 degrees to about 15 degrees, the tilt location is the third corner or fourth corner, and the second purge valve is located on the third corner. The third corner and the fourth corner are on the same end plate of the fuel cell stack.

In some embodiments, the method may further include implementing the purge strategy in real time. The fuel cell stack may comprise a maximum rated current density, and the stack operating conditions may include a stack current density of about 50 Amps to about the maximum rated current density of the fuel cell stack.

In some embodiments, the method may further include determining the purge strategy based on a switching point angle. If the tilt angle is less than the switching point angle, a first purge strategy is implemented by the controller and if the tilt angle is greater than the switching point angle, a second purge strategy is implemented by the controller. The switching point angle may be about 5 degrees.

## BRIEF DESCRIPTION OF THE DRAWINGS

FIG. 1A is a schematic view of an exemplary fuel cell system including an air delivery system, a hydrogen delivery system, and a fuel cell module including a stack of multiple fuel cells;

FIG. 1B is a cutaway view of an exemplary fuel cell system including an air delivery system, hydrogen delivery systems, and a plurality of fuel cell modules each including multiple fuel cell stacks;

FIG. 1C is a perspective view of an exemplary repeating unit of a fuel cell stack of the fuel cell system of FIG. 1A;

FIG. 1D is a cross-sectional view of an exemplary repeating unit of the fuel cell stack of FIG. 1C;

FIG. 2 is an illustration of a fuel cell stack with a first end and a second end;

FIG. 3 is a schematic of one embodiment of a fuel cell system or a powertrain system comprising a fuel cell stack;

FIG. 4 is a graph showing the water measurements when the fuel cell stack is tilted about 15 degrees at each of its corners independently; and

FIG. 5 is a graph showing the water measurements when the fuel cell stack is tilted about 15 degrees at a front corner where a purge valve is located;

FIG. 6 is a graph showing the water measurements when the fuel cell stack is tilted about 15 degrees at a back corner where a purge valve is located;

FIG. 7 is a graph showing the water measurements when the fuel cell stack is tilted about 15 degrees at a front corner where a purge valve is not located;

FIG. 8 is a graph showing the water measurements when the fuel cell stack is tilted about 15 degrees at a back corner where a purge valve is not located;

FIG. 9 is a graph showing the average cell voltage and stack power data at different current densities.

These and other features, aspects, and advantages of the present invention will become better understood when the following detailed description is read with reference to the accompanying drawings described herein. Reference is also made to the accompanying drawings that form a part hereof and in which is shown by way of illustrating specific embodiments in which the invention may be practiced. These embodiments are described in sufficient detail to enable those skilled in the art to practice what is claimed and it is to be understood that other embodiments may be utilized and that logical, mechanical, and electrical changes may be made without departing from the spirit and scope of the claims. The following detailed description is, therefore, not to be taken in a limiting sense.

## DETAILED DESCRIPTION

The present disclosure is directed to systems and methods for designing, implementing, and/or controlling a purge strategy in a fuel cell stack or powertrain to remove water when the fuel cell stack or powertrain is moving or operating at a tilted position. Specifically, a purge valve duty cycle of a fuel cell system or stack will adjust based on information and feedback from a tilt sensor in order to effectively remove water from the fuel cell system. Described herein are systems and methods of determining an operating strategy of one or more purge valve systems based on the fuel cell stack or powertrain tilt angle and tilt locations.

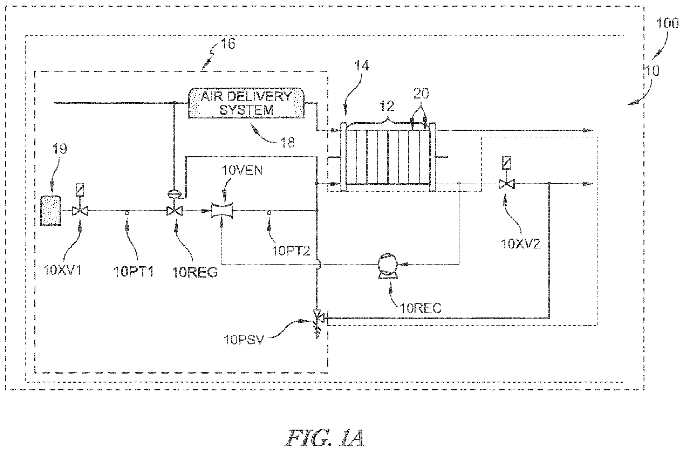

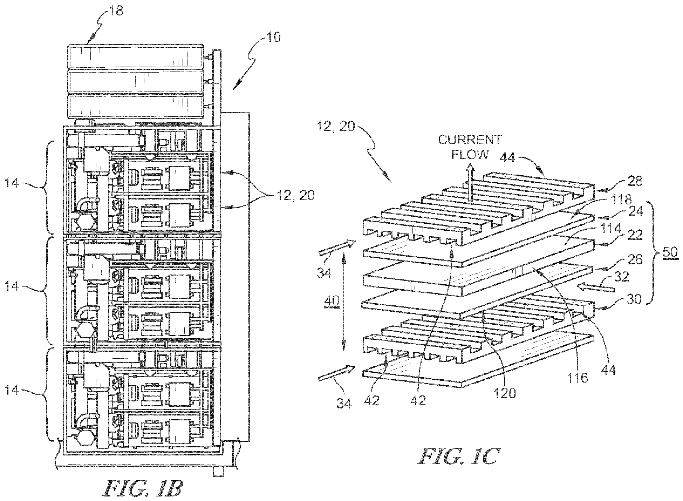

As shown in FIG. 1A, fuel cell systems 10 often include one or more fuel cell stacks 12 ("STK") or fuel cell modules 14 connected to a balance of plant (BOP) 16, including various components, to support the electrochemical conversion, generation, and/or distribution of electrical power to help meet modern day industrial and commercial needs in an environmentally friendly way. As shown in FIGS. 1B and 1C, fuel cell systems 10 may include fuel cell stacks 12 comprising a plurality of individual fuel cells 20. Each fuel cell stack 12 may house a plurality of fuel cells 20 assembled together in series and/or in parallel. The fuel cell system 10 may include one or more fuel cell modules 14 as shown in FIGS. 1A and 1B.

Each fuel cell module 14 may include a plurality of fuel cell stacks 12 and/or a plurality of fuel cells 20. The fuel cell module 14 may also include a suitable combination of associated structural elements, mechanical systems, hardware, firmware, and/or software that is employed to support the function and operation of the fuel cell module 14. Such items include, without limitation, piping, sensors, regulators, current collectors, seals, and insulators.

The fuel cells 20 in the fuel cell stacks 12 may be stacked together to multiply and increase the voltage output of a single fuel cell stack 12. The number of fuel cell stacks 12 in a fuel cell system 10 can vary depending on the amount of power required to operate the fuel cell system 10 and meet the power need of any load. The number of fuel cells 20 in a fuel cell stack 12 can vary depending on the amount of power required to operate the fuel cell system 10 including the fuel cell stacks 12.

The number of fuel cells 20 in each fuel cell stack 12 or fuel cell system 10 can be any number. For example, the number of fuel cells 20 in each fuel cell stack 12 may range from about 100 fuel cells to about 1000 fuel cells, including any specific number or range of number of fuel cells 20 comprised therein (e.g., about 200 to about 800). In an embodiment, the fuel cell system 10 may include about 20 to about 1000 fuel cells stacks 12, including any specific number or range of number of fuel cell stacks 12 comprised therein (e.g., about 200 to about 800). The fuel cells 20 in the fuel cell stacks 12 within the fuel cell module 14 may be oriented in any direction to optimize the operational efficiency and functionality of the fuel cell system 10.

The fuel cells 20 in the fuel cell stacks 12 may be any type of fuel cell 20. The fuel cell 20 may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells 20 may be a polymer electrolyte membrane or proton exchange membrane (PEM) fuel cell or a solid oxide fuel cell (SOFC).

In an embodiment shown in FIG. 1C, the fuel cell stack 12 includes a plurality of proton exchange membrane (PEM) fuel cells 20. Each fuel cell 20 includes a single membrane electrode assembly (MEA) 22 and a gas diffusion layers (GDL) 24, 26 on either or both sides of the membrane electrode assembly (MEA) 22 (see FIG. 1C). The fuel cell 20 further includes a bipolar plate (BPP) 28, 30 on the external side of each gas diffusion layers (GDL) 24, 26, as shown in FIG. 1C. The above-mentioned components, in particular the bipolar plate 30, the gas diffusion layer (GDL) 26, the membrane electrode assembly (MEA) 22, and the gas diffusion layer (GDL) 24 comprise a single repeating unit 50.

The bipolar plates (BPP) 28, 30 are responsible for the transport of reactants, such as fuel 32 (e.g., hydrogen) or oxidant 34 (e.g., oxygen, air), and cooling fluid 36 (e.g., coolant and/or water) in a fuel cell 20. The bipolar plates (BPP) 28, 30 can uniformly distribute reactants 32, 34 to an active area 40 of each fuel cell 20 through oxidant flow fields 42 and/or fuel flow fields 44 formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plate (BPP) 28, 30.

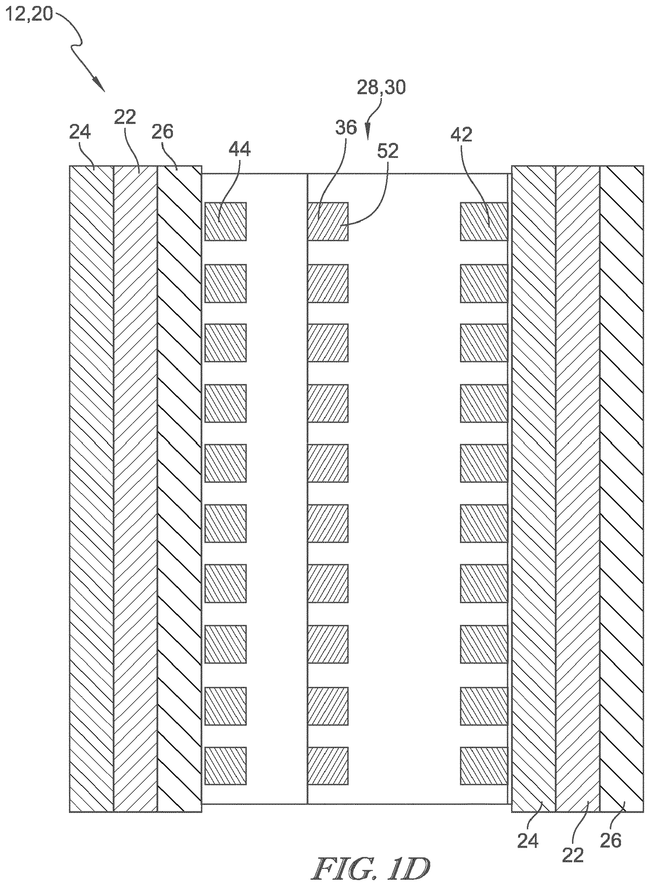

The bipolar plates (BPP) 28, 30 may each be formed to have reactant flow fields 42, 44 formed on opposing outer surfaces of the bipolar plate (BPP) 28, 30, and formed to have coolant flow fields 52 located within the bipolar plate (BPP) 28, 30, as shown in FIG. 1D. For example, the bipolar plate (BPP) 28, 30 can include fuel flow fields 44 for transfer of fuel 32 on one side of the plate 28, 30 for interaction with the gas diffusion layer (GDL) 26, and oxidant flow fields 42 for transfer of oxidant 34 on the second, opposite side of the plate 28, 30 for interaction with the gas diffusion layer (GDL) 24. As shown in FIG. 1D, the bipolar plates (BPP) 28, 30 can further include coolant flow fields 52 formed within the plate (BPP) 28, 30, generally centrally between the opposing outer surfaces of the plate (BPP) 28, 30. The coolant flow fields 52 facilitate the flow of cooling fluid 36 through the bipolar plate (BPP) 28, 30 in order to regulate the temperature of the plate (BPP) 28, 30 materials and the reactants. The bipolar plates (BPP) 28, 30 are compressed against adjacent gas diffusion layers (GDL) 24, 26 to isolate and/or seal one or more reactants 32, 34 within their respective pathways 44, 42 to maintain electrical conductivity, which is required for robust operation of the fuel cell 20 (see FIGS. 1C and 1D).

The fuel cell system 10 described herein, may be used in stationary and/or immovable power system, such as industrial applications and power generation plants. The fuel cell system 10 may also be implemented in conjunction with an air delivery system 18. Additionally, the fuel cell system 10 may also be implemented in conjunction with a hydrogen delivery system and/or a source of hydrogen 19 such as a pressurized tank, including a gaseous pressurized tank, cryogenic liquid storage tank, chemical storage, physical storage, stationary storage, an electrolysis system, or an electrolyzer. In one embodiment, the fuel cell system 10 is connected and/or attached in series or parallel to a hydrogen delivery system and/or a source of hydrogen 19, such as one or more hydrogen delivery systems and/or sources of hydrogen 19 in the BOP 16 (see FIG. 1A). In another embodiment, the fuel cell system 10 is not connected and/or attached in series or parallel to a hydrogen delivery system and/or a source of hydrogen 19.

In some embodiments, the fuel cell system 10 may include an on/off valve 10XV1 (e.g., a shutoff valve 10XV1), a pressure transducer 10PT1, a mechanical regulator 10REG, and/or a venturi 10VEN arranged in operable communication with each other and downstream of the hydrogen delivery system and/or source of hydrogen 19. The pressure transducer 10PT1 may be arranged between the on/off valve 10XV1 and the mechanical regulator 10REG. In some embodiments, a proportional control valve may be utilized instead of a mechanical regulator 10REG. In some embodiments, a second pressure transducer 10PT2 is arranged downstream of the venturi 10VEN, which is downstream of the mechanical regulator 10REG.

In some embodiments, the fuel cell system 10 may further include a recirculation pump 10REC downstream of the stack 12 and operably connected to the venturi 10VEN. The fuel cell system 10 may also include a further on/off valve 10XV2 (e.g., an exhaust valve 10XV2) downstream of the stack 12, and/or a pressure transfer valve 10PSV.

The present fuel cell system 10 may also be comprised in mobile applications. In an exemplary embodiment, the fuel cell system 10 is in a vehicle and/or a powertrain 100. A vehicle 100 comprising the present fuel cell system 10 may be an automobile, a pass car, a bus, a truck, a train, a locomotive, an aircraft, a light duty vehicle, a medium duty vehicle, or a heavy-duty vehicle. Type of vehicles 100 can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain 100 may be used on roadways, highways, railways, airways, and/or waterways. The vehicle 100 may be used in applications including but not limited to off highway transit, bobtails, and/or mining equipment. For example, an exemplary embodiment of mining equipment vehicle 100 is a mining truck or a mine haul truck. In addition, it may be appreciated by a person of ordinary skill in the art that the fuel cell system 10, fuel cell stack 12, and/or fuel cell 20 described in the present disclosure may be substituted for any electrochemical system, such as an electrolysis system (e.g., an electrolyzer), an electrolyzer stack, and/or an electrolyzer cell (EC), respectively.

As such, in some embodiments, the features and aspects described and taught in the present disclosure regarding the fuel cell system 10, stack 12, or cell 20 also relate to an electrolyzer, an electrolyzer stack, and/or an electrolyzer cell (EC). In further embodiments, the features and aspects described or taught in the present disclosure do not relate, and are therefore distinguishable from, those of an electrolyzer, an electrolyzer stack, and/or an electrolyzer cell (EC).

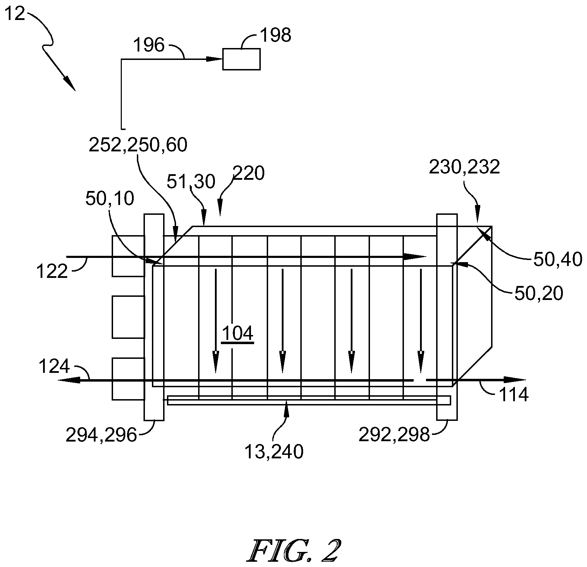

As shown in FIG. 2, the fuel cell stack 12 has a first end 292 and a second end 294. The first end 292 is a dry end 292, and the second end 294 is a wet end 294. The wet end 294 may be an end plate having main fluid interconnections. The dry end 292 may be an end plate with or without a purge valve or exhaust valve 180. Typically, the wet end 294 and the dry end 292 of the stack 12 are opposite each other having components (e.g., fuel cells 20) comprised there between. In some other embodiments, the first end 292 may be a wet end, and the second end 294 may be a dry end.

The fuel cell stack 12 may be configured to be connected, attached, and/or adjoined to or with a balance of plant (BOP) 296 at the second, wet end 294, while the stack 12 may not be configured to be connected, attached, and/or adjoined to or with the balance of plant (BOP) 298 at the first, dry end 292. Alternatively, the fuel cell stack 12 may be configured to be connected, attached, and/or adjoined to or with a balance of plant (BOP) 296 at the first, dry end 292 and the stack 12 may not be configured to be connected, attached, and/or adjoined to or with the balance of plant (BOP) 298 at the second, wet end 294.

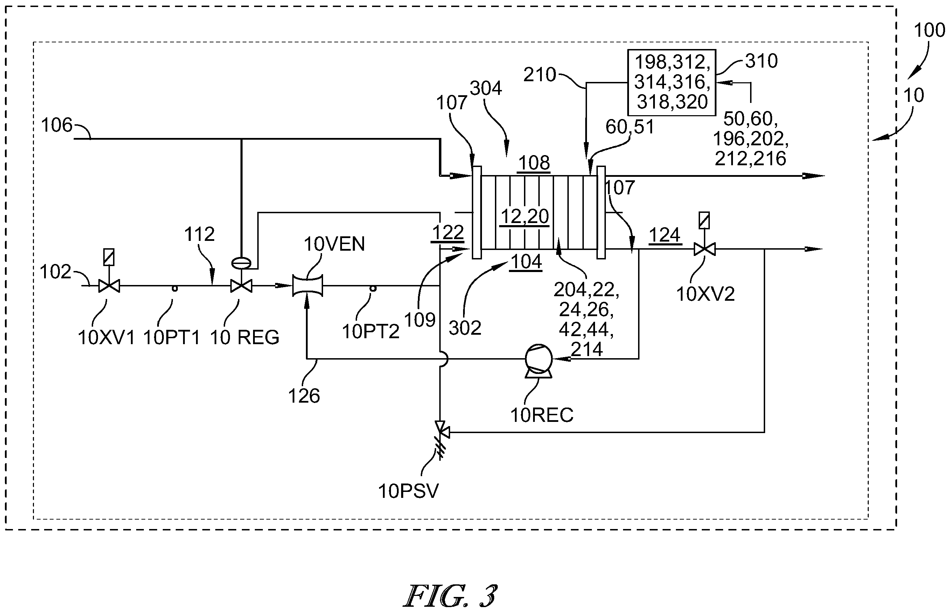

FIG. 3 illustrates the fuel cell system 10 comprising the fuel cell stack 12. In addition, the fuel cell system 10 may also comprise other components, including but not limited to the mechanical regulator 10REG, the recirculation pump or blower 10REC, the exhaust valve 10XV2, the shutoff valve 10XV1, the pressure safety valve 10PSV, one or more pressure transducers 10PT1/10PY2, the ejector 10VEN, and an electronic control unit (ECU) or a controller 198. The controller 198 may control or manage different components of the fuel cell system 10.

In some embodiments, the present fuel cell system 10 may include one or more fuel cell stacks 12 or fuel cells 20 with an anode or fuel side 104 and a cathode or air side 108. A fuel cell 20 may include, but is not limited to a phosphoric acid fuel cell (PAFC), a molten carbonate fuel cell (MCFC), a proton exchange membrane fuel cell, also called a polymer exchange membrane fuel cell (PEMFC), or a solid oxide fuel cell (SOFC). In an exemplary embodiment of the fuel cell system 10, the fuel cell 20 is a PEMFC or a SOFC.

The anode or fuel side 104 of the fuel cell 20 or the fuel cell stack 12 may operate as a closed system to prevent unintended loss of fuel and improve fuel consumption and efficiency. Alternatively, or additionally, the cathode or air side 108 of the fuel cell 20 or fuel cell stack 12 may operate as a closed system. Fuel 102 flows through the anode side 104 and oxidant 106 flows through the cathode side 108.

Recirculation of an anode exhaust 126 may increase the fuel flow rate of an anode inlet stream 122 such that the fuel flow rate is above the rate of fuel consumption in the fuel cell 20 or fuel cell stack 12. Ensuring that the fuel flow rate is above the fuel consumption rate prevents fuel cell 20 or fuel cell stack 12 starvation, manages the humidity level of a fuel cell membrane 204 in the membrane electrode assembly (MEA) 22, and improves fuel cell 20 or fuel cell stack 12 performance and life.

The fuel cell system 10 may also include one or multiple valves, sensors, compressors, regulators, blowers, injectors, ejectors, and/or other devices 112 in series or in parallel with each other. The fuel cell system 10 may comprise one or more exhaust valves 10XV2. For example, the fuel cell system 10 may comprise only one exhaust valve 10XV2 if the fuel cell system 10 is being used for stationary applications.

In some embodiments, if the fuel cell system 10 is being used in vehicle based applications, the fuel cell system 10 may include at least two exhaust valves 10XV2. The one or more exhaust valves 10XV2 may remove water 13 and/or gas. The one or more exhaust valves 10XV2 may first remove water 13 collected at a low point in the fuel cell system 10 or in a collection device 240 (shown in FIG. 2) and then remove any gas. If water 13 is continuously being generated, the water 13 may be removed as a two phase mixture comprising mostly gas. One or more exhaust valves 10XV2 may be located at a low point in the fuel cell system 10 to collect water 13.

As shown in FIG. 3, the fuel cell system 10 may include a closed loop anode system 302 with the shutoff valve 10XV1 at an anode inlet 109 , the exhaust valve 10XV2 at an anode outlet 111, and an open loop cathode system 304 that vents exhaust to the atmosphere. Alternatively, the fuel cell system 10 may include a closed loop cathode system 304 and an open loop anode system 302. Alternatively, the fuel cell system 10 may include a closed loop cathode system 304 and a closed loop anode system 302. The water 13 produced from the anode system 302 and/or the cathode system 304 may accumulate in the tilted fuel cell stack 12 depending on the location of the tilt.

Referring to FIG. 2, fuel enters the fuel cell stack 12 as the anode inlet stream 122 and exits as an anode outlet stream 124 through the wet end 294. The fuel cell stack 12 may be tilted along any of four corners 10, 20, 30, or 40. In particular, the fuel cell stack 12 includes anode exhaust valves or purge valve systems 220, 230 at the lowest point on corners 10, 20, 30, or 40 respectively.

Three factors are critical for purging water 13 from the fuel cell stack 12. The first is the design of the flow field plates 42, 44 (shown in FIG. 1C) within the fuel cell stack 12 to effectively eliminate water 13 by design. The second is the type of gas diffusion layer (GDL) 24, 26 and membrane electrode assembly (MEA) 22 used in the fuel cell stack 12 (shown in FIG. 1C). The third factor is ensuring that the amount of water 13 that is accumulated in the anode 104 is purged effectively regardless of the stack 12 or system 10 tilt angle 60 or angle of tilt 60 while maintaining fuel cell stack 12 performance (shown in FIG. 2).

Referring back to FIG. 2, one or more purge valve systems 230 are located at the first end 292 of the fuel cell stack 12. One or more purge valve systems 220 are also located at the second end 294 of the fuel cell stack 12. In other embodiments, one or more purge valve systems 220, 230 may be located at any corner 10, 20, 30, and/or 40. The controller 198 receives, processes, and/or utilizes inputs and/or feedback 196 (e.g., pitch, roll, and yaw) from a tilt sensor 250 or the pressure transducers 10PT1, 10PT2 to vary a purge valve duty cycle on the end plate at the wet end 294 or on the end plate at the dry end 292 and to aid in the removal of water 13 from the fuel cell stack 12.

Water 13 in the fuel cell stack 12 is purged through one or both of the purge valve systems 220, 230. The opening or operation of the two or more purge valve systems 220, 230 is determined by which purge valve system 220, 230 is physically positioned lower than the other due to a tilt, position, altitude, and/or orientation of the fuel cell stack 12 or system 10 of the vehicle 100. The purge valve systems 220, 230 may be anode purge valve systems 220, 230 or cathode purge valves systems 220, 230. The fuel cell stack 12 includes one or more sensors 250, such as the tilt sensor 250. The tilt sensor 250 may be in a fuel cell power module 252, which may be tilted at different angles during the operation of the fuel cell system 10.

A purge on/off duty cycle of each of the purge valve systems 220, 230 is adjusted to purge water 13 from the fuel cell stack 12 based on the inputs and/or the feedback 196 from the tilt sensor 250 and as determined and/or interpreted by the controller 198. Referring to FIGS. 2 and 3, inputs and/or the feedback 196 to the controller 198 may be provided directly by the fuel cell system 10, or indirectly by a user. The purge on/off duty cycle is defined as:

$$\text{Purge on duty cycle} = \text{On Time}/ (\text{On Time} + \text{Off Time})$$

$$\text{Purge off duty cycle} = \text{Off Time} / (\text{On Time} + \text{Off Time})$$

The 'on time' indicates an operational time of the purge valve system 220, 230. The 'off time' indicates a nonoperational time of the purge valve system 220, 230. The purge on/off duty cycle may change throughout module operation. The purge on/off duty cycle may or may not be equivalent over the life of the module. The duty cycle of the purge valve systems 220 may or may not be equal to the duty cycle of the purge valve systems 230.

The purging frequency and/or purge on/off duty cycle may be mapped against operating conditions of the fuel cell system 10. For example, the purge on/off duty cycle may be based on the fuel cell stack 12 operating current density. Other operating factors that affect purging frequency and/or purge on/off duty cycle may include fuel cell stack 12 temperature, cathode excess air ratio or cathode stoichiometry, oxidant and/or fuel temperature, humidity of air and humidity inside of the stack as well as tilt angle 60 of stack/module.

The purging frequency and/or purge on/off duty cycle may determine a water accumulation rate in the fuel cell stack 12. A lookup map or table 202 may be utilized to determine the water accumulation rate in the fuel cell stack 12. Specifically, the lookup table 202 may be used to calibrate and ensure that the water accumulation rate is not detrimental to the fuel cell stack 12 performance or to a rate of aging of the fuel cell stack 12.

Fuel cell voltages may be monitored by the controller 198. The purge frequency, and purge on/off duty cycle of one or both purge valve systems 220, 230 may be increased for non-optimal low fuel cell voltages. For example, the purge frequency, and the purge on/off duty cycle of one or both purge valve systems 220, 230 may be increased when fuel cell voltage drops to a minimum predetermined voltage drop threshold such as about 0.3 V/cell or less.

The voltage drop threshold where increases in purge frequency and purge on/off duty cycle occur is determined based on the operating current density of the fuel cell stack 12. Health of the fuel cell individual cell voltages also affects the voltage drop threshold. If the fuel cell voltage drops during fuel cell stack 12 operation, the purge on/off duty cycle may be changed during operation.

Change in the purge on/off duty cycle improves the fuel cell stack 12 performance by purging the excess water 13 that accumulates at the anode 104 of the fuel cell stack 12, increasing the stoichiometry within the fuel cell stack 12 and removing any build-up of inert gases. For example, when the back end 232 of the fuel cell stack 12 is underperforming, the purge on/off duty cycle is varied and the operational time (e.g., 'on time') for the purge valve systems 230 is prolonged. This improves fuel cell stack 12 performance and stability.

As shown in FIG. 3, a method for purge control may include the controller 198 developing and/or implementing a purge strategy 210 to manage or control the purge valve systems 220, 230 of the fuel cell system 10. The purge strategy 210 may include an open loop map-based control strategy to determine opening or closing of each of the purge valve systems 220, 230. The opening or closing of each of the purge valve systems 220, 230 includes determining and/or adjusting a purge on/off duty cycle or the fraction of 'on time' of each purge valve systems 220, 230.

The method includes determining and/ or adjusting the purge on/off duty cycle or the fraction of 'on time' of each purge valve systems 220, 230 based on an operating current density of the fuel cell stack 12 performance and stability, a tilt location 51 of the fuel cell stack 12, and the tilt angle 60 of the fuel cell stack 12. The tilt location 51 of the fuel cell stack 12 indicates which corner 10, 20, 30, or 40 of the fuel cell stack 12 is tilting. The tilt angle 60 of the fuel cell stack 12 indicates the angle of tilt at the tilt location 51. The fuel cell stack 12 performance and stability depends on the operating current density of the fuel cell stack 12. The tilt angle 60 and the tilt location 51 determine the amount of water 13 produced at the different operating current densities.

The method for purge control may include the controller 198 determining a period of time (T) between purge events based on the amount of water 13 collected at the tilt location 51. The specified 'on time' may be determined by the controller 198 to remove the water 13 from the tilt location 50. A water collection measurement may assist in developing the purge strategy 210 implemented by the controller 198. For example, at various current densities, a measured amount of water 13 may be purged without allowing the purging of excess fuel from the fuel cell stack 12.

The period of time (T) between purge events may be based on the lookup map 202 that depends on fuel cell stack 12 operating conditions such as current density, pressure, excess air ratio or cathode stoichiometry, etc. Alternatively, or additionally, the period of time (T) between purge events may be determined by a calculation based on fuel cell stack 12 operating pressure. Alternatively, or additionally, the period of time (T) between purge events and purge on/off duty cycle may be modified by closed loop control, based on the feedback 196 from the pressure transducers 10PT1, 10PT2.

Referring to FIGS. 2 and 3, the lookup map 202 used in the method above may be a purge map 212. Factors used to develop the purge map 212 may include an assessment of water 13 collected from the anode 104, the cathode 108, and/or the performance of fuel cell stack 12. The purge map 212 may be developed by collecting the water 13 at various operating current densities to ensuring all the water 13 has been removed from the fuel cell system 10.

The purge map 212 may also be based on cathode stoichiometry, maximum or minimum cell voltage differential readings 216 via cell voltage monitoring (CVM), differential pressure across the anode 104 and/or cathode 108, and/or 3D purge mapping at various ambient conditions (such as temperature, altitude, etc.). The purge map 212 may be used to control the purge on/off duty cycle of the purge valve systems 220, 230 at both ends 292, 294 sequentially or simultaneously.

The method for purge control may include the controller 198 analyzing performance of the fuel cell stack 12 through a cell voltage monitoring (CVM) circuit board 214 which reads cell voltages 216 across the fuel cell stack 12. Cell voltages 216 across the fuel cell stack 12 may affect the purge on/off duty cycle for the purge valve systems 220, 230. The purge on/off duty cycle may be developed to ensure that a required volume of water 13 from the fuel cell stack 12 has been removed. The purge on/off duty cycle may also be determined while analyzing cell to cell voltage deviations automatically computed by the controller 198.

As shown in FIG. 3, the controller 198 may be a part of a control system 310. The controller 198 or the control system 310 may include a memory 312, a processor 314, and a communication system 316. The controller 198 may be embodied as any type of computation or computer device 318 capable of performing the functions described herein, including, but not limited to, a server (e.g., stand-alone, rack-mounted, blade, etc.), a network appliance (e.g., physical or virtual), a high-performance computing device, a web appliance, a distributed computing system, a computer, a processor-based system, a multiprocessor system, a smartphone, a tablet computer, a laptop computer, a notebook computer, and a mobile computing device.

The different components of the control system 310 may be connected to each other, in communication with each other, and/or configured to be connected and/or in communication with each other through wired, wireless and/or power line connections and associated protocols (e.g., Ethernet, InfiniBand®, Bluetooth®, Wi-Fi®, WiMAX, 3G, 4G LTE, 5G, etc.).

The computing device 318 may also include additional and/or alternative components, such as those commonly found in a computer (e.g., various input/output devices). In other embodiments, one or more of the illustrative computing device(s) 318 of components may be incorporated in, or otherwise form a portion of another component.

The processor 314 may be embodied as any type of computational processing tool or equipment capable of performing the functions described herein. For example, the processor 314 may be embodied as a single or multicore processor(s), digital signal processor, microcontroller, or other processor or processing/controlling circuit. The memory 312 may be embodied as any type of volatile or non-volatile memory or data storage capable of performing the functions described herein.

In operation, the memory 312 may store various data and software used during operation of the computing device 318 such as operating systems, applications, programs, libraries, and drivers. The memory 312 is communicatively coupled to the processor 314 via the I/O subsystem 320, which may be embodied as circuitry and/or components to facilitate input/output operations with the processor 314, the memory 312, and other components of the computing device 318.

For example, the I/O subsystem 320 may be embodied as, or otherwise include, memory controller hubs, input/output control hubs, sensor hubs, host controllers, firmware devices, communication links (i.e., point-to-point links, bus links, wires, cables, light guides, printed circuit board traces, etc.) and/or other components and subsystems to facilitate the input/output operations.

In one embodiment, the memory 312 may be directly coupled to the processor 314, for example via an integrated memory controller hub. Additionally, in some embodiments, the I/O subsystem 320 may form a portion of a system-on-a-chip (SoC) and be incorporated, along with the processor 314, the memory 312, and/or other components of the computing device 318, on a single integrated circuit chip (not shown).

The controller 198, the computing device 318, and the vehicle 100 may be connected, communicate with each other, and/or configured to be connected or in communication with each over the network 316 using one or more communication technologies (e.g., wired, wireless and/or power line communications) and associated protocols (e.g.,

Ethernet, InfiniBand®, Bluetooth®, Wi-Fi®, WiMAX, 3G, 4G LTE, 5G, etc.).

The computing device 318 may also include any number of additional input/output devices, interface devices, hardware accelerators, and/or other peripheral devices. The computing device 318 of the control system 310 of a vehicle 100 may be configured into separate subsystems for managing data and coordinating communications throughout the vehicle 100 or the fuel cell system 10.

As shown in FIGS. 2-3, the method for purge control may include the controller 198 determining the frequency and/or purge on/off duty cycle so that a purge event or process may have minimal impact on the fuel cell stack 12 pressure. Ensuring that the impact of a purge event on fuel cell stack 12 pressure is minimal may increase the lifetime of the purge valve systems 220, 230.

The method for purge control or the purge strategy 210 may include the controller 198 managing or controlling the purge valve systems 220, 230 based on the tilt location 51 and the tilt angle 60 of the fuel cell stack 12. If the fuel cell stack 12 is tilted in an orientation that allows water 13 to collect in a particular corner 10, 20, 30, or 40, one or more of the purge valve systems 220, 230 may be kept open by the controller 198 for a specified period of time to drain water 13. The volume of water 13 collected at more than one corner 10, 20, 30, or 40 may be combined while determining the purge on/off duty cycle of the purge valve systems 220, 230.

The effect of fuel cell stack 12 tilting on the operation of the purge valve systems 220, 230 was experimentally determined by measuring water 13 production at different tilt locations 51, at different tilt angles 60, and at different operating current densities. Measurements at different current densities were taken when the fuel cell stack 12 was tilted at each of the four corners 10, 20, 30, or 40. The fuel cell stack 12 was sequentially tilted at the four different corners 10, 20, 30, or 40, and the water 13 produced at the purge valve systems 220, 230 at each of the tilt positions and/or angles was measured to determine operation of the purge valve systems 220, 230.

The operation of the purge valve systems 220, 230 may depend on the tilt angle 60 of the fuel cell stack 12. At every tilt location 51 (e.g., corner 10, 20, 30, or 40), the fuel cell stack 20 was tilted at different tilt angles 60. The performance of the fuel cell stack 12 at different tilt angles 60 was analyzed and compared to its performance at a 0 degrees tilt angle 60 (i.e., on flat surface or in straight line).

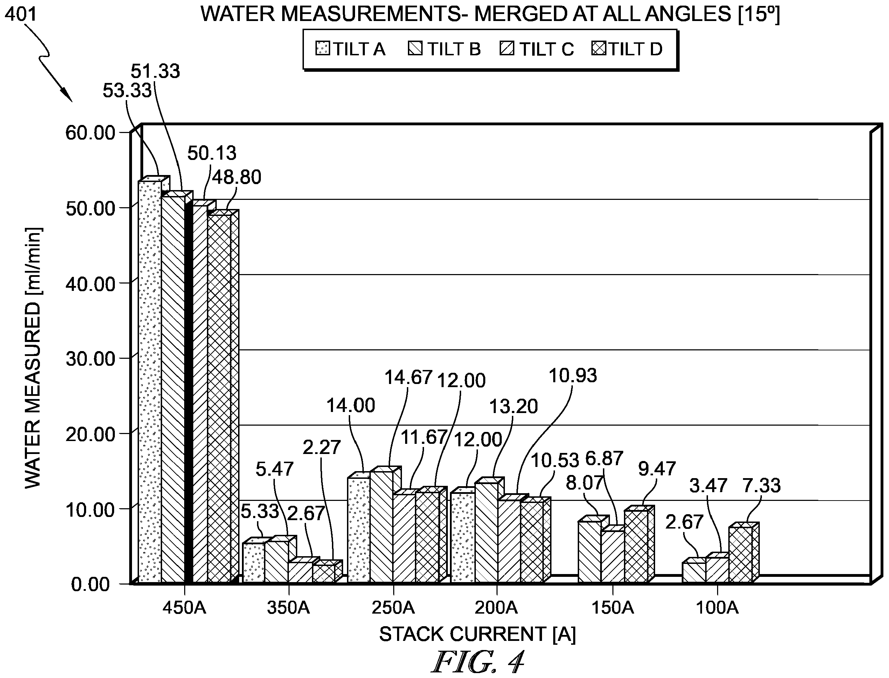

A baseline polarization curve was determined to measure water 13 from purge valve systems 220, 230 during normal operating conditions i.e.at a 0 degrees tilt angle 60. For example, water measurements were collected at operating current densities ranging from about 100 Amps to about 450 Amps, including any specific or range of current densities comprised therein. As shown in graph 401 in FIG. 4, the purge on/off duty cycle is varied at different tilt angles and at varying load and water production rates to remove approximately the same amount of water 13 across all tilt locations 51. The water 13 found inside of the fuel cell stack 12 may be product water or water that has back diffused across the membrane of the fuel cell stack 12.

A switching point is the tilt angle 60 where the operation of the purge valve systems 220, 230 switches from an operational strategy that includes operating both purge valve systems 220, 230 to an operational strategy that includes the operation of only one of the purge valve systems 220 or 230. The purge on/off duty cycle of one or both purge valve systems 220, 230 may be adjusted at the switching point.

The switching point may be determined based on the fuel cell stack 12 performance and/or by measuring water 13 generated at different operating current densities. The switching point may be any size angle, such as an angle from about 5 degrees to about 25 degrees, including any specific or range of angle degrees comprised therein. The switching point may also be any angle greater than 25 degrees. The switching point is determined by tilting the fuel cell stack 12 at each corner 10, 20, 30, or 40.

Based on water measurements at a maximum current density of about 450 Amps, the water 13 collected at about 5 degrees tilt angle 60 at corner 30 was determined to be approximately the same as the water 13 collected at about 0 degrees tilt angle 60 at the corner 30. Thus, the switching point when the fuel cell stack 12 is tilted at the corner 30 was determined to be about 5 degrees. The water 13 collected from purge valve systems 230 was negligible when the fuel cell stack 12 was tilted at the corner 30. Similarly, the switching point when the fuel cell stack 12 was tilted at the corner 10, 20, or 40 was determined to be about 5 degrees.

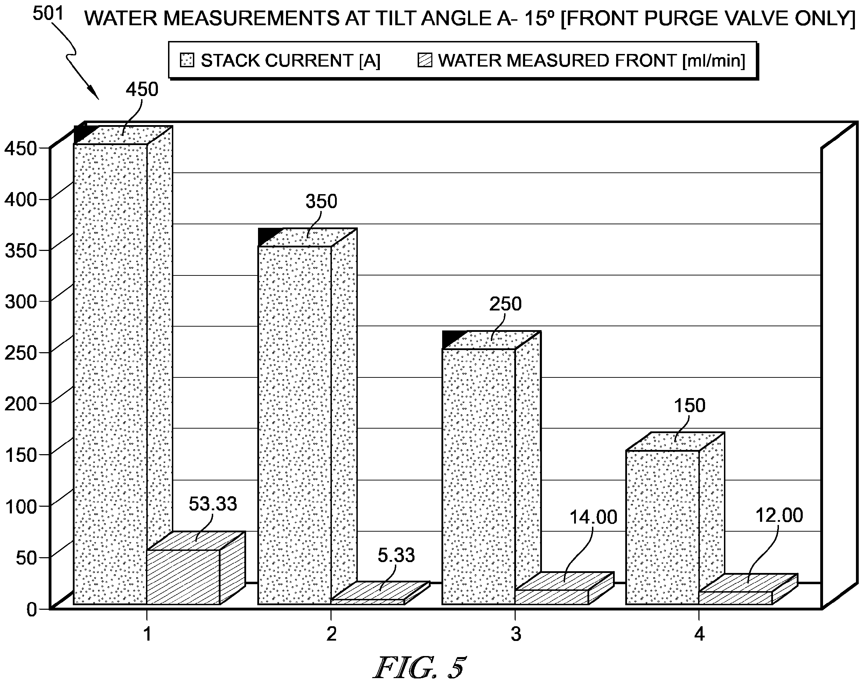

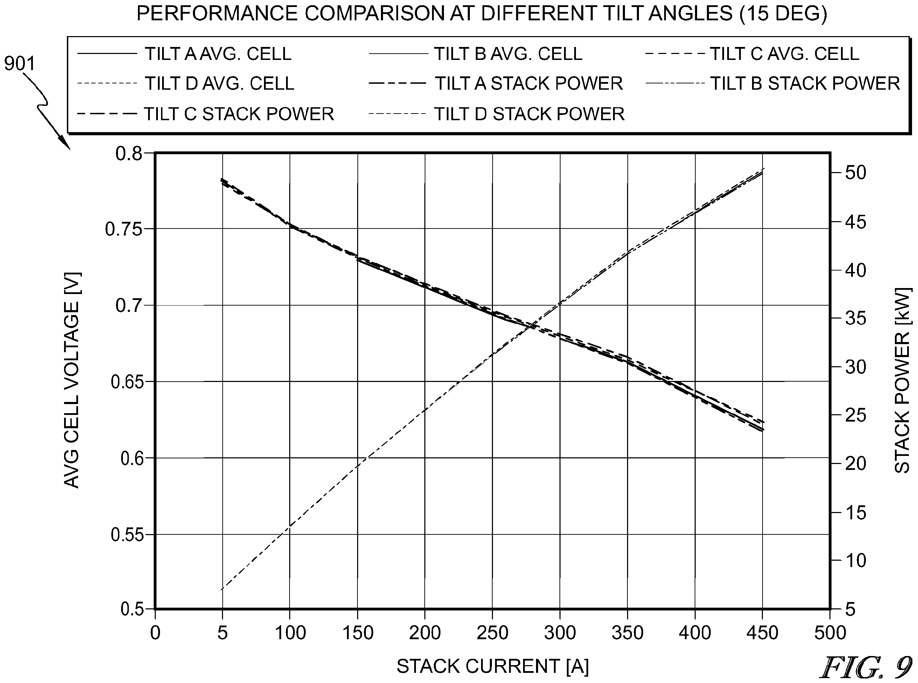

FIG. 5 illustrates a graph 501 showing the water measurements when the fuel cell stack 12 is tilted about 15 degrees at the corner 30 as an example. At this angled corner 30, the fuel cell system 10 is only operating the single purge valve system 220. A polarization curve shown in FIG. 9 is generated when the fuel cell stack 12 is operating at a tilt angle 60 of about 15 degrees at the corner 30. When the fuel cell stack 12 is operating at a tilt angle 60 of about 15 degrees at the corner 30, the purge strategy 210 includes the operation of only the purge valve system 220.

A similar or different purge strategy 210 may be implemented when the the fuel cell stack 12 is operating at a different tilt angle 60 at the corner 30. The tilt angle 60 at the corner 30 may be any angle, such as an angle that ranges from about 1 degree to about 10 degrees, from about 10 degrees to about 20 degrees, or from about 20 degrees to about 30 degrees, including any angle or range of angles comprised therein or greater.

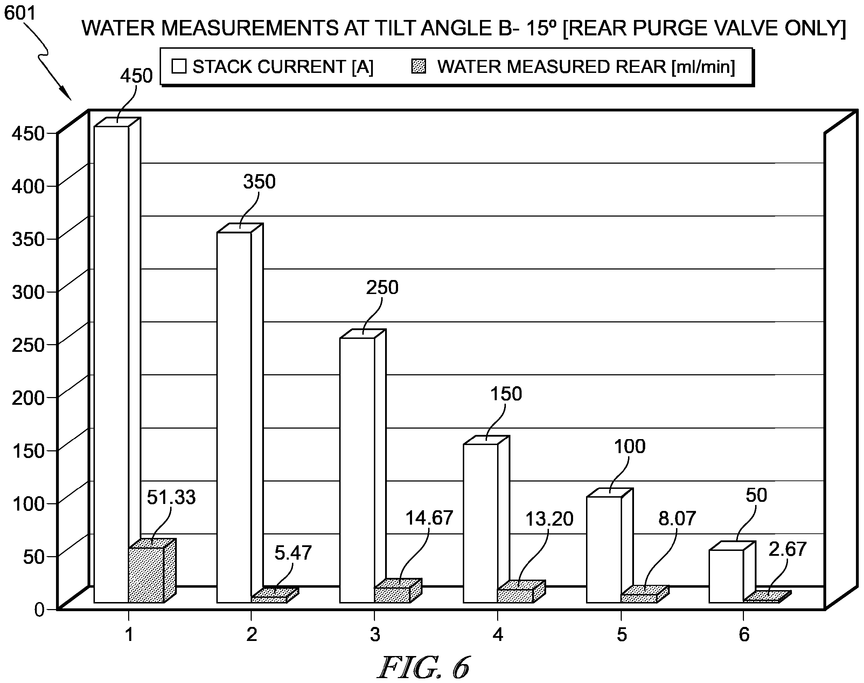

FIG. 6 illustrates a graph 601 showing the water measurements when the fuel cell stack 12 is tilted at about 15 degrees at corner 40. At this angled corner 40, the fuel cell system 10 is operating only the purge valve system 230.

A polarization curve is generated when the fuel cell stack 12 is operating at a tilt angle 60 of about 15 degrees at the corner 40 (see FIG. 9). When the fuel cell stack 12 is operating at a tilt angle 60 of about 15 degrees at the corner 40, the purge strategy 210 includes the operation of only the purge valve system 230.

A similar or different purge strategy 210 may be implemented when the the fuel cell stack 12 is operating at a different tilt angle 60 at the corner 40. The tilt angle 60 at the corner 40 may be any angle, such as an angle that ranges from about 1 degree to about 10 degrees, from about 10 degrees to about 20 degrees, or from about 20 degrees to about 30 degrees, including any value and range of angles comprised therein or greater.

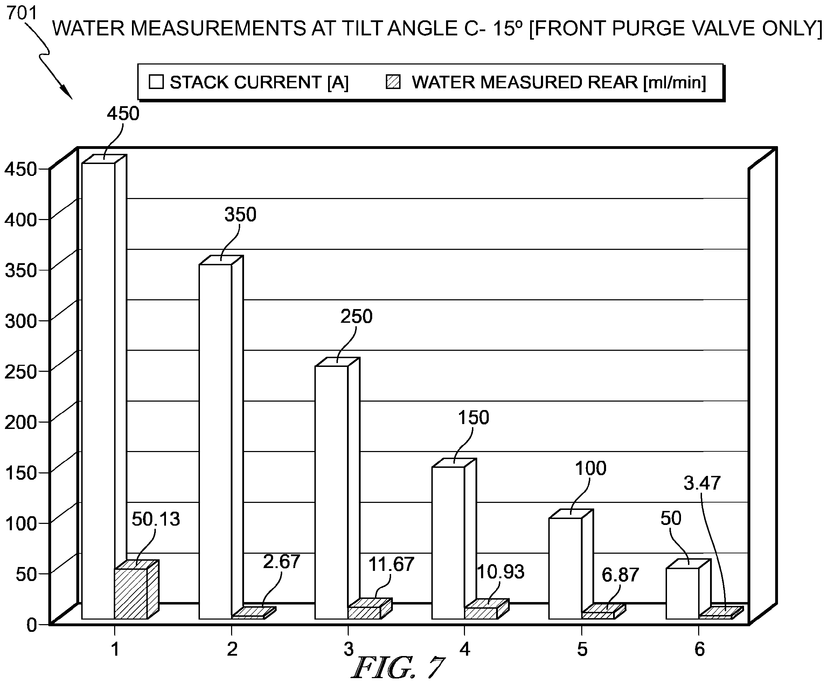

FIG. 7 illustrates a graph 701 showing the water measurements when the fuel cell stack 12 is tilted about 15 degrees at corner 10. At this angled corner 10, the fuel cell system 10 is operating only the purge valve system 220. A polarization curve is generated when the fuel cell stack 12 is operating at a tilt angle 60 of about 15 degrees at the corner 10 (see FIG. 9). When the fuel cell stack 12 is operating a tilt angle 60 of about 15 degrees at the corner 10, the purge strategy 210 includes the operation of only the purge valve system 220.

A similar or different purge strategy 210 may be implemented when the the fuel cell stack 12 is operating at a different tilt angle 60 at the corner 10. The tilt angle 60 at the corner 10 may be any angle, such as an angle that ranges from about 1 degree to about 10 degrees, from about 10 degrees to about 20 degrees, or from about 20 degrees to about 30 degrees, including any value and range of angles comprised therein or greater.

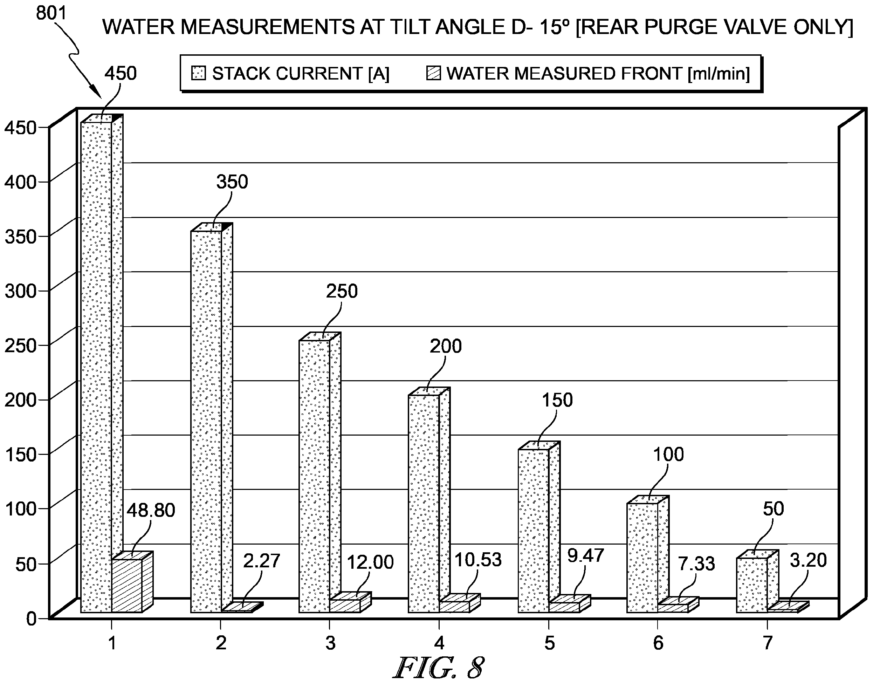

FIG. 8 illustrates a graph 801 showing the water measurements when the fuel cell stack 12 is tilted about 15 degrees at the corner 20. At this angled corner 20, the fuel cell system 10 is operating only the purge valve system 230. A polarization curve is generated when the fuel cell stack 12 is operating at a tilt angle 60 of about 15 degrees at the corner 20 (see FIG. 9). When the fuel cell stack 12 is operating a tilt angle 60 of about 15 degrees at the corner 20, the purge strategy 210 includes the operation of only the purge valve system 230.

A similar or different purge strategy 210 may be implemented when the fuel cell stack 12 is operating at a different tilt angle 60 at the corner 20. The tilt angle 60 at the corner 20 may by any angle, including an angle that ranges from about 1 degree to about 10 degrees, from about 10 degrees to about 20 degrees, or from about 20 degrees to about 30 degrees, or from about 30 degrees to about 50 degrees, or from about 50 degrees to about 80 degrees including any value and range of angles comprised therein or greater.

In some embodiments, if the tilt angle 60 is less than about 5 degrees, purge valve systems 220, 230 at both the first end 292 and the second end 294 of the fuel cell stack 12 may be operated. Additionally, as the tilt angle 60 increases, the percent duty cycle may increase until operating only one of the purge valve systems 220, 230 suffices to remove the necessary amount of water to preserve and maintain operation and functionality of the fuel cell stack 12.

Referring back to FIG. 4, the graph 401 shows the water measurements when the fuel cell stack 12 is tilted about 15 degrees at the corner 10, 20, 30, or 40. Graph 401 is a merged graph of graphs 501, 601, 701, 801 shown in FIGS. 5 to 8. The purge on/off duty cycle was optimized such that at varying stack currents approximately an equivalent amount of water is eliminated from the stack via purging. FIG. 9 illustrates a graph 901 showing the polarization curves indicating average cell voltage and stack power data at different current densities and when the fuel cell stack 12 is tilted at different corners 10, 20, 30, and 40. Throughout the tilt testing, the fuel cell stack 12 may be able to operate at the maximum current of about 450 Amps with an equivalent module performance independent of the tilt location 51.

In other embodiments, the fuel cell stack 12 may operate at a current density that may range from about 1 Amp to about its maximum rated current, including any current density or range of current density comprised therein. Additionally, or alternatively, the purge strategy may include operating more than one purge valve system 220, 230 with a split duty cycle percentage between the more than one purge valve systems 220, 230.

The purge valve strategy 210 shown in FIGS. 5-8 can be embedded in a software or program that can be accessed and/or communicated by the controller 198 shown in FIG. 2. The purge valve strategy 210 may be determined manually or automatically by the controller 198. The purge valve strategy 210 may be determined in real-time. The phrase 'real-time' refers to at least one of the times of occurrence of the associated events: the time of measurement and collection of predetermined data, the time to process the data, and the time of a system response to the events and the environment occurring instantaneously or substantially instantaneously. That data can be accessed instantaneously or substantially instantaneously by the controller 198. The purge valve strategy 210 may not always implement the same tilt angle 60 at a particular operating current. The tilt angle may adjust according to the fuel cell stack 12 state of health. The tilt angle 60 may depend on cell to cell voltage deviation, and/or minimum or average cell voltage value.

The following described aspects of the present invention are contemplated and non-limiting:

A first aspect of the present invention relates to a fuel cell system. The fuel cell stack system comprises a fuel cell stack with a first corner, a second corner, a third corner, and a fourth corner, a tilt sensor located on the fuel cell stack. The tilt sensor is operable to detect tilt location of the fuel cell stack by determining a longitudinal, transverse, and vertical axis of the fuel cell stack. The tilt location is the first, second, third or fourth corner of the fuel cell stack. The system further includes a first purge valve system and a second purge valve system for removing water from an anode exhaust. The first purge valve system and the second purge valve system may be located at two different corners of the fuel cell stack. The system further includes a controller, including a memory and a processor. The memory and/or processor of the controller is configured to manage the first and the second purge valve system by determining a purge strategy based on feedback provided by the tilt sensor.

A second aspect of the present invention relates to a method of operating a fuel cell stack system. The method comprises monitoring performance of the fuel cell stack system, determining a tilt location of the fuel cell stack system, determining a purge strategy of a first purge valve system and a second purge valve system using a controller based on the tilt location, fuel cell stack operating conditions, time of operation, fuel cell stack pressure, one or more lookup maps, or fuel cell stack tilt angle, and opening the first purge valve system or the second purge valve system. The fuel cell stack system comprises a fuel cell stack with a first corner, a second corner, a third corner, and a fourth corner, and a tilt sensor.

In the first aspect of the present invention, the first purge valve system may be located at the first corner and the second purge valve system may be located at the third corner. In the first aspect of the present invention, the purge strategy may comprise purging frequency or purge on/off duty cycle of the first purge valve system and the second purge valve system.

In the first aspect of the present invention, the controller may be configured to determine opening of the first or the second purge valve system depending on the tilt location. In the first aspect of the present invention, the controller may be configured to determine the opening of the first or second purge valve system in real-time. In the first aspect of the present invention, the controller may be configured to determine the opening of the first or second purge valve system depending on the tilt angle or tilt location.

In the first aspect of the present invention, the tilt sensor may be operable to detect the tilt angle if the fuel cell stack is tilted at the first, second, third or fourth corner. The first purge valve system may be located at the first corner and the second purge valve system may be located at the third corner, and the controller may be configured to determine the opening of the first purge valve system and not the second purge valve system when the tilt location is the first corner.

In the first aspect of the present invention, the controller may be configured to determine the opening of the first purge valve system and not the second purge valve system when the tilt location is the second corner, the first purge valve system is located on the first corner, and the second corner and first corner are located on a same end plate of the fuel cell stack.

In the first aspect of the present invention, the controller may be configured to determine the opening of the second purge valve system and not the first purge valve system when the tilt location is the third corner and the second purge valve system is located on the third corner. In the first aspect of the present invention, the controller may be configured to determine the opening of the second purge valve system and not the first purge valve system when the tilt location is the fourth corner, the second purge valve system is located on the third corner, and the third corner and fourth corner are located on a same end plate of the fuel cell stack. In the first aspect of the present invention, the tilt angle of the fuel cell stack may be more than about 5 degrees and less than about 80 degrees.

In the second aspect of the present invention, the method may further include monitoring the performance of the fuel cell stack system performance by analyzing cell voltages across the fuel cell stack using a cell voltage monitoring circuit board. In the second aspect of the present invention, the method may further include determining the purge strategy based on the tilt sensor determining the tilt angle at the tilt location.

In the second aspect of the present invention, the purge strategy may include opening the first purge valve system if the tilt angle is in the range of about 5 degrees to about 15 degrees, the tilt location is the first corner or second corner, and the first purge valve is located on the first corner. The first corner and the second corner are on same end plate of the fuel cell stack.

In the second aspect of the present invention, the purge strategy may include opening the first purge valve system if the tilt angle is in the range of about 5 degrees to about 15 degrees, the tilt location is the third corner or fourth corner, and the second purge valve is located on the third corner. The third corner and the fourth corner are on same end plate of the fuel cell stack.

In the second aspect of the present invention, the method may further include implementing the purge strategy in real time. The fuel cell stack may comprise a maximum rated current density, and the stack operating conditions may include a stack current density of about 50 Amps to about the maximum rated current density of the fuel cell stack.

In the second aspect of the present invention, the method may further include determining the purge strategy based on a switching point angle. If the tilt angle is less than the switching point angle, a first purge strategy is implemented by the controller and if the tilt angle is greater than the switching point angle, a second purge strategy is implemented by the controller. The switching point angle may be about 5 degrees.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially of, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first", "second", "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising", "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

**Claims**

1. A fuel cell stack system comprising:

   a fuel cell stack with a first corner, a second corner, a third corner, and a fourth corner,
   a tilt sensor located on the fuel cell stack, wherein the tilt sensor is operable to detect tilt location of the fuel cell stack by determining a longitudinal, transverse and vertical axis of the fuel cell stack, and wherein the tilt location is the first, second, third or fourth corner of the fuel cell stack,
   a first purge valve system and a second purge valve system for removing water from an anode exhaust, and
   a controller including a memory and a processor configured to manage the first and the second purge valve system by determining a purge strategy based on feedback provided by the tilt sensor,
   wherein the first purge valve system and the second purge valve system are located at two different corners of the fuel cell stack.

2. The fuel cell stack system of claim 1, wherein the purge strategy comprises determining a first purging frequency or a first purge on/off duty cycle of the first purge valve system and a second purging frequency or a second purge on/off duty cycle of the second purge valve system.

3. The fuel cell stack system of claim 1 or claim 2, wherein the controller is configured to determine opening of the first or the second purge valve system depending on the tilt location.

4. The fuel cell stack system of any of claims 1 to 3, wherein the controller is configured to determine the opening of the first or second purge valve system depending on the tilt angle of the tilt location.

5. The fuel cell stack system of any of claims 1 to 4, wherein the first purge valve system is located at the first corner and the second purge valve system is located at the third corner, and wherein the controller determines the opening of the first purge valve system and not the second purge valve system when the tilt location is the first corner.

6. The fuel cell stack system of any of claims 1 to 5, wherein the controller is configured to determine the opening of the first purge valve system and not the second purge valve system when the tilt location is the second corner, wherein the first purge valve system is located on the first corner, and wherein the second corner and first corner are located on a same end plate of the fuel cell stack.

7. The fuel cell stack system of any of claims 1 to 6, wherein the controller is configured to determine the opening of the second purge valve system and not the first purge valve system when the tilt location is the third corner and the tilt angle is in the range of about 5 degrees to about 15 degrees, wherein the second purge valve system is located on the third corner.

8. The fuel cell stack system of any of claims 1 to 7, wherein the controller is configured to determine the opening of the second purge valve system and not the first purge valve system when the tilt location is the third corner and the tilt angle is in the range of about 5 degrees to about 15 degrees, wherein the second purge valve system is located on the third corner.

9. A method of operating a fuel cell stack system comprising:

   monitoring performance of the fuel cell stack system,
   determining a tilt location of the fuel cell stack system,
   determining a purge strategy of a first purge valve system and a second purge valve system using a controller based on the tilt location, fuel cell stack operating conditions, time of operation, fuel cell stack pressure, one or more lookup maps, or fuel cell stack tilt angle,
   opening the first purge valve system or the second purge valve system,

   wherein the fuel cell stack system comprises a fuel cell stack with a first corner, a second corner, a third corner, a fourth corner, and a tilt sensor.

10. The method of claim 9, whererin monitoring the perfomance of fuel cell stack system comprises analyzing cell voltages across the fuel cell stack using a cell voltage monitoring circuit board.

11. The method of claim 9 or claim 10, wherein the purge strategy comprises opening the first purge valve system if the tilt angle is in the range of about 5 degrees to about 15 degrees and if the tilt location is the first corner or second corner, wherein the first purge valve is located on the first corner and wherein the first corner and the second corner are on same end plate of the fuel cell stack.

12. The method of any of claims 9 to 11, wherein the purge strategy comprises opening the first purge valve system if the tilt angle is in the range of about 5 degrees to about 15 degrees and if the tilt location is the third corner or fourth corner, wherein the second purge valve is located on the third corner, and wherein the third corner and the fourth corner are on same end plate of the fuel cell stack.

13. The method of any of claims 9 to 12, wherein the purge strategy is implemented by the controller in real time.

14. The method of any of claims 9 to 13, wherein the fuel cell stack comprises a maximum rated current density, and wherein the stack operating conditions comprises a stack current density of about about 50 Amps to about the maximum rated current density of the fuel cell stack.

15. The method of any of claims 9 to 14, wherein determining the purge strategy is based on a switching point angle, and wherein if the tilt angle is less than the switching point angle, a first purge strategy is implemented by the controller and if the tilt angle is greater than the switching point angle, a second purge strategy is implemented by the controller.

*FIG. 1A*

FIG. 1B

FIG. 1C

FIG. 1D

*FIG. 2*

*FIG. 3*

EP 4 297 135 A1

*FIG. 4*

EP 4 297 135 A1

WATER MEASUREMENTS AT TILT ANGLE A- 15º [FRONT PURGE VALVE ONLY]

501

☒ STACK CURRENT [A]     ☒ WATER MEASURED FRONT [ml/min]

*FIG. 5*

EP 4 297 135 A1

FIG. 6

*WATER MEASUREMENTS AT TILT ANGLE B- 15º [REAR PURGE VALVE ONLY]*

Legend: □ STACK CURRENT [A]  ▨ WATER MEASURED REAR [ml/min]

EP 4 297 135 A1

**701**

WATER MEASUREMENTS AT TILT ANGLE C- 15° [FRONT PURGE VALVE ONLY]

☐ STACK CURRENT [A]  ☒ WATER MEASURED REAR [ml/min]

*FIG. 7*

EP 4 297 135 A1

EP 4 297 135 A1

**WATER MEASUREMENTS AT TILT ANGLE D- 15° [REAR PURGE VALVE ONLY]**

801

- ▦ STACK CURRENT [A]
- ▨ WATER MEASURED FRONT [ml/min]

*FIG. 8*

PERFORMANCE COMPARISON AT DIFFERENT TILT ANGLES (15 DEG)

901

TILT A AVG. CELL    TILT B AVG. CELL    TILT C AVG. CELL
TILT D AVG. CELL    TILT A STACK POWER    TILT B STACK POWER
TILT C STACK POWER    TILT D STACK POWER

AVG CELL VOLTAGE [V]

STACK CURRENT [A]

STACK POWER [kW]

*FIG. 9*

EP 4 297 135 A1

Europäisches
Patentamt

European
Patent Office

Office européen
des brevets

# EUROPEAN SEARCH REPORT

Application Number

**EP 23 17 8295**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 311160 A (TOYOTA MOTOR CORP) 25 December 2008 (2008-12-25) * paragraphs [0024], [0025], [0027], [0036]; figure 1 * | 1-15 | INV. H01M8/04119 H01M8/04223 H01M8/04291 H01M8/04492 H01M8/04664 |
| A | JP 2010 177148 A (HONDA MOTOR CO LTD) 12 August 2010 (2010-08-12) * paragraphs [0009] – [0011], [0024], [0032], [0072]; figures 2b, 5 * | 1-15 | |
| A | US 4 968 566 A (LERSCH JOSEF [DE] ET AL) 6 November 1990 (1990-11-06) * columns 3, 4; figure 1 * | 1-15 | |
| A | US 2010/228411 A1 (SAITO TOMOHIRO [JP]) 9 September 2010 (2010-09-09) * paragraph [0033]; figures 1, 2 * | 1-15 | |

TECHNICAL FIELDS
SEARCHED (IPC)

H01M

The present search report has been drawn up for all claims

| Place of search | Date of completion of the search | Examiner |
|---|---|---|
| Munich | 10 November 2023 | Schild, Jérémy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 17 8295

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2023

| Patent document cited in search report | | Publication date | Patent family member(s) | | Publication date |
|---|---|---|---|---|---|
| JP 2008311160 | A | 25-12-2008 | NONE | | |
| JP 2010177148 | A | 12-08-2010 | NONE | | |
| US 4968566 | A | 06-11-1990 | DE | 3826590 A1 | 08-02-1990 |
| | | | JP | H0287481 A | 28-03-1990 |
| | | | US | 4968566 A | 06-11-1990 |
| US 2010228411 | A1 | 09-09-2010 | CN | 101489825 A | 22-07-2009 |
| | | | DE | 112007002001 T5 | 18-06-2009 |
| | | | JP | 4380676 B2 | 09-12-2009 |
| | | | JP | 2008072795 A | 27-03-2008 |
| | | | KR | 20090052348 A | 25-05-2009 |
| | | | US | 2010228411 A1 | 09-09-2010 |
| | | | WO | 2008032497 A1 | 20-03-2008 |

For more details about this annex : see Official Journal of the European Patent Office, No. 12/82

**REFERENCES CITED IN THE DESCRIPTION**

**Patent documents cited in the description**

- US 63353382